# EUROPÄISCHE PATENTSCHRIFT

(11) **EP 3 293 438 B1**
(45) Veröffentlichungstag und Bekanntmachung des Hinweises auf die Patenterteilung: **30.09.2020**
(21) Anmeldenummer: 17186719.5
(22) Anmeldetag: 17.08.2017
(51) Int. Cl.: F16P 3/14, G01V 8/20

(54) **SICHERHEITSLICHTVORHANG**
SAFETY LIGHT CURTAIN
RIDEAU LUMINEUX DE SÉCURITÉ

(30) Priorität: 08.09.2016 DE 102016116828
(43) Veröffentlichungstag der Anmeldung: 14.03.2018
(73) Patentinhaber: SICK AG, 79183 Waldkirch (DE)
(72) Erfinder: Brucker, Ralph, 77796 Mühlenbach (DE); Grabinger, Herr Jörg, 79312 Emmendingen (DE)

(56) Entgegenhaltungen:
- EP-A1- 2 108 879
- EP-A1- 2 474 960
- EP-A2- 2 017 524
- JP-A- 2001 071 192

## Beschreibung

Die vorliegende Erfindung betrifft ein Verfahren nach dem Oberbegriff von Anspruch 1.

Es besteht das Problem, den Zugang oder Ausgang einer Maschine gegen den Zutritt eines Menschen zu sichern, gleichzeitig soll allerdings eine Materialzufuhr und eine Materialausfuhr erlaubt sein.

Eine bekannte Funktion, die unter dem Begriff 'Muting' bekannt ist, gibt dem Anwender bzw. Kunden die Möglichkeit, mit Hilfe von externen Mutingsensoren Material ein- und auszufahren. Für Muting benötigt man externe Mutingsensoren, die Aufwände bei der Montage und Wartung verursachen. Ebenfalls benötigen diese Platz, der in Produktionshallen stets knapp und teuer ist.

Die EP 2 306 063 A1 offenbart einen Sicherheitssensor zur Gefahrenbereichsüberwachung einer Maschine oder Anlage, wobei eine Überbrückungseinheit vorgesehen ist, mittels derer die Sicherheitsfunktion überbrückt wird, wenn innerhalb eines Zeitintervalls von zwei unabhängigen Signalquellen ein Objektvorhandensignal registriert wird, wobei eine der Signalquellen im Sensor selbst integriert ist.

Die EP 2 017 524 A2 offenbart ein Lichtgitter zur Erfassung von Objekten in einem Überwachungsbereich, mit einer Anzahl von Strahlachsen, welche jeweils von einem Sendelichtstrahlen emittierenden Sender und einem zugeordneten Empfänger gebildet sind, wobei bei freiem Überwachungsbereich die Strahlachsen nicht unterbrochen sind und bei einem Objekteingriff im Überwachungsbereich wenigstens eine Strahlachse unterbrochen ist, und mit einer Auswerteeinheit, mittels derer bei Eindringen eines sicherheitskritischen Objekts in den Überwachungsbereich eine Objektmeldung generierbar ist, dadurch gekennzeichnet, dass in der Auswerteeinheit ein nichtsicherheitskritisches Objekt bei Passieren des Überwachungsbereichs dadurch identifizierbar ist, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind, und dass bei einem identifizierten nichtsicherheitskritischen Objekt in der Auswerteeinheit ein Mutingsignal generiert wird.

Die JP 2001 071 192 A offenbart ein Austastsystem, das ein Betriebserlaubnissignal nur dann ausgeben kann, wenn die Arbeit einer vorgeschriebenen Form in den Raum eines optischen Sensors eingeführt wird, wo mindestens ein Satz einer Mehrzahl von Lichtsendern/Lichtempfängern einander gegenüberliegend angeordnet sind mit einer Steuerschaltung, in der das optische Muster das durch den Lichtsender und den Lichtempfänger erzeugt wird, vorab auf einer Lichtempfängerseite gespeichert wird und in dem nur ein Betriebserlaubnissignal ausgegeben wird, ein empfangenes Muster mit einem gespeicherten optischen Muster übereinstimmt.

Die EP 2 108 879 A1 offenbart ein Verfahren zur Überwachung eines Schutzfeldes, durch welches Objekte transportiert werden, bei dem das Schutzfeld durch wenigstens ein Lichtgitter, mit einer Vielzahl jeweils Sendeelementen und Empfangselementen des Lichtgitters zugeordneten parallelen Lichtstrahlen, in einer Ebene quer zur Transportrichtung gebildet wird, bei Transport eines Objektes durch das Schutzfeld in zeitlich aufeinander folgenden Abtastschritten die Signale aller Empfangselemente des Lichtgitters aufgenommen werden und die Signale eines Abtastschrittes ein Objekt-Bitmuster bilden, Referenz-Bitmuster eines zulässigen Objektes aufgenommen und gespeichert werden, und nach Vergleich der Objekt-Bitmuster mit den Referenz-Bitmustern ein Sicherheitssignal vom Lichtgitter ausgegeben wird, wenn die Objekt-Bitmuster des Objektes mit den Referenz-Bitmustern nicht übereinstimmen, wobei bei Durchgang eines Objektes wenigstens eine Häufigkeit eines Objekt-Bitmusters erfasst und dem jeweiligen Objekt-Bitmuster zugeordnet abgespeichert wird, dass die so ermittelte Häufigkeit mit der Häufigkeit eines entsprechenden Referenz-Bitmusters des zulässigen Objektes verglichen wird und das Sicherheitssignal nur dann ausgelöst wird, wenn die ermittelte Häufigkeit nicht mit der Häufigkeit des Referenz-Bitmusters übereinstimmt.

Eine Aufgabe der Erfindung besteht darin, einen verbesserten Sicherheitslichtvorhang bereitzustellen. Weiter soll eine Montage des Sicherheitslichtvorhangs vereinfacht werden. Weiter soll eine Verfügbarkeit des Sicherheitslichtvorhangs verbessert werden. Weiter soll eine Verringerung der Wartung und eine Platzeinsparung erreicht werden, wodurch eine höhere Akzeptanz bei einem Anwender herbeigeführt werden soll. Weiter soll der Sicherheitslichtvorhang sicherer gegen Manipulationen sein.

Die Aufgabe wird gemäß Anspruch 1 gelöst.

Gemäß der Erfindung ist eine Überbrückungsfunktion eines definierten Bereichs einer Schutzeinrichtung, bzw. des Sicherheitslichtvorhangs möglich, ohne zusätzliche Sensoren anbringen zu müssen. Dadurch ist eine Montage des Sicherheitslichtvorhangs vereinfacht. Dadurch, dass zusätzliche Sensoren entfallen, ist eine Verfügbarkeit des Sicherheitslichtvorhangs verbessert. Der Wegfall von zusätzlichen Sensoren führt auch zu einer Verringerung der Wartung und zu einer Platzeinsparung, wodurch wiederum eine höhere Akzeptanz bei einem Anwender herbeigeführt wird. Weiter ist der Sicherheitslichtvorhang sicherer gegen Manipulationen, da keine zusätzlichen Sensoren vorhanden sind, die einer Manipulation zugänglich sind.

Gemäß der Erfindung ist auch eine Sicherheit erhöht, da gegenüber dem bekannten Stand der Technik nicht das gesamte Schutzfeld deaktiviert ist, sondern nur ein Überbrückungsteilbereich vorhanden ist. Ein Teilbereich des Schutzfeldes ist daher immer aktiviert, um unzulässige Objekte zu detektieren. Bei einem unzulässigen Objekt kann es sich beispielsweise um eine Person handeln.

In Weiterbildung der Erfindung ist eine Unterbrechung mindestens eines Lichtstrahls in mindestens einem zweiten unterschiedlichen und beabstandeten zweiten Teilbereich eine Detektion eines zulässigen Objektes. Der erste Teilbereich und der zweite Teilbereich bilden jeweils Objekterfassungsbereiche im Schutzfeld. Die Größe der Teilbereiche kann beispielsweise 150 mm entlang der Längsausdehnung des Sicherheitslichtvorhangs betragen. Wenn in beiden definierten Teilbereichen ein Objekt detektiert wird, aktiviert die Steuer- und Auswerteeinheit den Überbrückungsteilbereich, welcher eine Ausblendung eines Teilbereiches des Schutzfeldes bewirkt. Durch die Definition von zwei Teilbereichen wird eine Sicherheit weiter erhöht und eine Manipulation erschwert.

Die Teilbereiche sind innerhalb des Überbrückungsteilbereiches angeordnet.

In einer bevorzugten Ausführung der Erfindung weist der Sicherheitslichtvorhang einen elektronischen Eingang auf für ein externes Signal einer externen Steuerung, wobei das externe Signal ein Objekttypsignal für zulässige Objekte ist, wobei die Steuer- und Auswerteeinheit ausgebildet ist, bei Erfassung des zulässigen Objektes und des Objekttypsignals den Überbrückungsteilbereich zu aktivieren und kein Abschaltsignal zu erzeugen. Dabei ist bevorzugt vorgesehen, dass lediglich der erste Teilbereich vorgesehen ist, um ein zulässiges Objekt zu detektieren und das externe Signal ausgewertet wird. Wenn das Objekttypsignal anliegt und ein Objekt im definierten ersten Teilbereich detektiert wird, aktiviert die Steuer- und Auswerteeinheit den Überbrückungsteilbereich.

In Weiterbildung der Erfindung ist eine Zeitdauer einstellbar, für die der Überbrückungsteilbereich längstens aktivierbar ist. Dadurch wird der Überbrückungsteilbereich zur Sicherheit spätestens nach Ablauf der Zeitspanne deaktiviert. Beispielsweise beträgt die Zeitspanne wenigstens 1 Sekunde bis zu 1 Minute.

Dabei können mehrere verschiedene Zeitdauern in der Steuer- und Auswerteeinheit abgespeichert sein. Je nach Objekttypsignal, wobei verschiedene Objekttypsignale vorgesehen sind, können durch die Steuer- und Auswerteeinheit verschiedene Zeitdauern bzw. Zeitspannen eingestellt werden.

In Weiterbildung der Erfindung ist die Steuer- und Auswerteeinheit ausgebildet, den Überbrückungsteilbereich so lange zu aktivieren, solange mindestens einer der Lichtstrahlen im Schutzfeld unterbrochen ist.

Dabei kann es auch insbesondere vorgesehen sein, den Überbrückungsteilbereich so lange zu aktivieren, solange das Objekttypsignal anliegt und mindestens einer der Lichtstrahlen im Schutzfeld unterbrochen ist.

In Weiterbildung der Erfindung ist die Steuer- und Auswerteeinheit ausgebildet, den Überbrückungsteilbereich so lange zu aktivieren, solange mindestens ein einziger Lichtstrahl im Schutzfeld dauerhaft unterbrochen ist. Der Lichtstrahl bzw. ein entsprechendes Paar aus Lichtsender und Lichtempfänger des Sicherheitslichtvorhanges sind beispielsweise auf der Höhe einer Trägereinrichtung eines Objektes angeordnet, wobei die Trägereinrichtung über die ganze Länge eine Lichtstrahlunterbrechung mindestens eines einzigen Lichtstrahles erzeugt. Dabei hat die Trägereinrichtung etwa die gleiche Länge wie das Objekt selbst.

In einer bevorzugten Ausführungsform ist die Steuer- und Auswerteeinheit ausgebildet, den Überbrückungsteilbereich so lange zu aktivieren, solange das Objekttypsignal vorhanden ist und solange eine vorbestimmte Zeitdauer nicht überschritten ist.

In Weiterbildung der Erfindung ist die Steuer- und Auswerteeinheit ausgebildet, eine Zeitüberwachung durchzuführen, wobei eine Erkennung eines zulässigen Objektes in dem ersten Teilbereich und dem zweiten Teilbereich innerhalb eines bestimmten Zeitraumes erfolgen muss. Ansonsten wird das Objekt als unzulässig erkannt.

In Weiterbildung der Erfindung ist die Steuer- und Auswerteeinheit ausgebildet, in mindestens einem der Teilbereiche eine Mindestanzahl von unterbrochenen Lichtstrahlen zu erfassen und den Überbrückungsteilbereich zu aktivieren, wenn die Mindestanzahl von Lichtstrahlen unterbrochen ist.

In Weiterbildung der Erfindung ist die Steuer- und Auswerteeinheit ausgebildet, den Überbrückungsteilbereich zu aktivieren, wenn in dem ersten Teilbereich und dem zweiten Teilbereich in einem bestimmten Zeitraum eine Mindestanzahl an Lichtstrahlen unterbrochen ist.

In einer bevorzugten Ausführungsform ist die Steuer- und Auswerteeinheit ausgebildet, eine Anzahl, eine Position und/oder eine Größe von Teilbereichen und/oder eine Mindestanzahl von notwendig unterbrochenen Lichtstrahlen abhängig von dem Objekttypsignal einzustellen, wobei unterschiedliche Objekttypsignale vorgesehen sind.

Unterschiedliche Objektetypsignale können beispielsweise über den elektronischen Eingang oder auch über mehrere elektronische Eingänge eingelesen werden.

In Weiterbildung der Erfindung ist die Steuer- und Auswerteeinheit ausgebildet, innerhalb des aktiven Überbrückungsteilbereiches eine Anzahl vorbestimmter Lichtstrahlunterbrechungen auszuwerten und bei Nichtunterbrechung der Lichtstrahlen ein Abschaltsignal zu erzeugen. Beispielsweise wird das Abschaltsignal erzeugt, wenn die Anzahl von Lichtstrahlunterbrechungen nach einer bestimmten Zeitdauer von der Steuer- und Auswerteeinheit nicht erkannt wurde.

Die Lichtstrahlunterbrechungen werden beispielsweise durch die Trägereinrichtung, durch Stützen der Trägereinrichtung, oder durch das Objekt selbst hervorgerufen.

Wird eine voreingestellte Anzahl von Lichtstrahlunterbrechungen detektiert, so wird der Überbrückungsteilbereich wieder deaktiviert.

Vorteilhaft ist die Steuer- und Auswerteeinheit ausgebildet, innerhalb des aktiven Überwachungsteilbereiches eine kontinuierliche Veränderung von unterbrochenen Lichtstrahlen auszuwerten und ein Abschaltsignal zu erzeugen wenn die kontinuierliche Veränderung nicht detektierbar ist.

Beispielsweise werden zwei Punkte bzw. zwei Bereiche für das Objekt bzw. eine Objektkontur definiert. Ein erster Punkt ist für das Starten einer Überwachung, wonach eine Kontur des Objektes beispielsweise stetig abfällt, d. h. oberste unterbrochene Lichtstrahlen nähern sich immer mehr dem Boden, bzw. der Abstand zwischen unterbrochenen Lichtstrahlen und dem Boden wird immer kürzer. Diese Regel wird von der Steuer- und Auswerteeinheit überprüft bis der zweite Punkt erreicht ist. Ab dem zweiten definierten Punkt könnte beispielsweise eine maximale Anzahl an Lichtstrahlen oder eine Größe innerhalb des Überbrückungsteilbereiches definiert werden, die noch zugelassen wird, beispielsweise dass sich die Kontur ab dem zweiten Punkt wieder erhöht. Beispielsweise durch einen Spoiler an einer Fahrzeugkarosse. Würde beispielsweise eine Person auf dem Heck des Fahrzeuges sitzen, würde die Objektkontur abweichen und zu einem Zustand führen, in dem ein Abschaltsignal erzeugt wird.

Die Punkte oder Bereiche können beispielsweise grafisch in einer grafischen Benutzeroberfläche mit einem Eingabegerät, nämlich mit einer Maus ausgewählt werden. Die weiteren notwendigen Eingaben, wie beispielsweise die Steigung können ebenfalls über die grafische Benutzeroberfläche eingegeben werden.

In Weiterbildung der Erfindung ist die Steuer- und Auswerteeinheit ausgebildet, den aktiven Überwachungsteilbereich zu deaktivieren, wenn eine Mindestanzahl von notwendig unterbrochenen Lichtstrahlen innerhalb des Teilbereiches detektierbar ist, wobei innerhalb einer vorbestimmten Zeit der Überwachungsteilbereich deaktivierbar ist.

Dabei wird beispielsweise eine Detektion der Endphase durch Unterbrechung eines definierten Objekt-Ende-Erfassungsbereichs bzw. Teilbereichs durchgeführt. Dabei können auch mehrere Teilbereiche vorgesehen sein.

Falls alle Lichtstrahlen des Sicherheitslichtvorhanges frei sind, kann es vorgesehen sein, den Überbrückungsteilbereich zu deaktivieren und das Schutzfeld vollständig wieder zu überwachen. Dadurch wird nach einem Durchfahren des Objektes automatisch wieder die Schutzfunktion des Sicherheitslichtvorhanges aktiviert.

In Weiterbildung der Erfindung ist die Steuer- und Auswerteeinheit ausgebildet, während des aktivierten Überbrückungsteilbereiches die Lichtstrahlunterbrechungen im aktivierten Überbrückungsteilbereich aufzuzeichnen und auszuwerten und eine Typerkennung aufgrund gespeicherter Typmuster von unterbrochenen Lichtstrahlen durchzuführen.

Die Typerkennung basiert beispielsweise auf mehreren gespeicherten Typmustern. Wird eines dieser Typmuster erkannt, wird der zugehörige Typ beispielsweise an eine übergeordnete Steuerung übermittelt bzw. weitergegeben.

Die Typüberwachung kann zur Verschärfung der Überwachung eingesetzt werden. Dabei wird der erwartete Typ vorgegeben. Wird dieser in einer bestimmten Zeit nicht detektiert, wird die Überbrückung aufgehoben. Die Erkennung kann beispielsweise in einer Automobil-Lackierzelle bei der Produktion von Automobilen eingesetzt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen erfindungsgemäßen Sicherheitslichtvorhang;
- Figur 2: eine punktförmige Darstellung von Lichtstrahlen in Strahlrichtung;
- Figur 3: einen Sicherheitslichtvorhang mit einem Teilbereich;
- Figur 4: ein Signaldiagramm zu Figur 3;
- Figur 5: einen Sicherheitslichtvorhang mit einem Überbrückungsbereich;
- Figur 6: einen Sicherheitslichtvorhang mit einem Überbrückungsbereich;
- Figur 7: ein Signaldiagramm zu Figur 6;
- Figur 8: eine punktförmige Darstellung von Lichtstrahlen in Strahlrichtung;
- Figur 9: einen Sicherheitslichtvorhang mit einem Überbrückungsbereich;
- Figur 10: einen Sicherheitslichtvorhang mit einem Überbrückungsbereich;
- Figur 11: eine punktförmige Darstellung von Lichtstrahlen in Strahlrichtung;

In den nachfolgenden Figuren sind identische Teile mit identischen Bezugszeichen versehen.

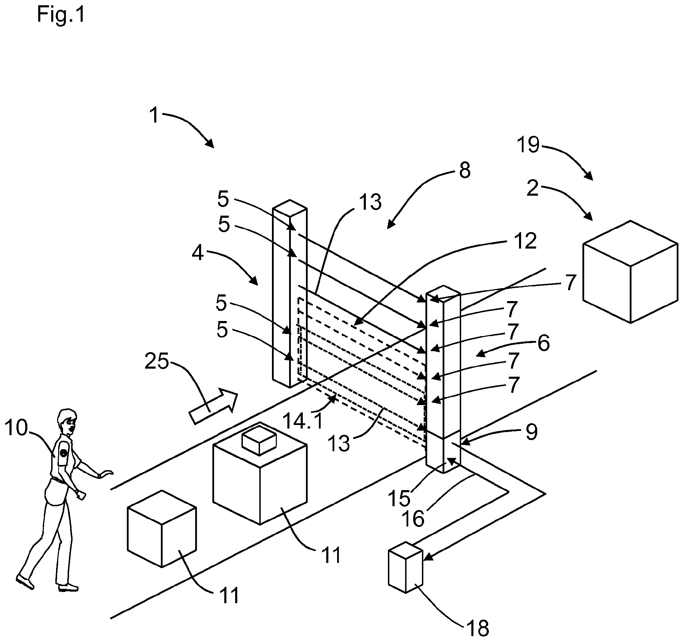

Figur 1 zeigt einen Sicherheitslichtvorhang 1 zur Überwachung eines Gefahrenbereichs 19 einer Maschine 2, umfassend eine Sendeeinheit 4 mit einer Vielzahl von Lichtstrahlen emittierenden Lichtsendern 5 und einer Empfangseinheit 6 mit einer Vielzahl von Lichtstrahlen 13 empfangenden Lichtempfängern 7 zur Überwachung eines Schutzfeldes 8, eine Steuer- und Auswerteeinheit 9, welche ausgebildet ist bei Erfassung eines unzulässigen Objektes 10 im Schutzfeld 8 als Sicherheitsfunktion ein Abschaltsignal für die Maschine 2 zu generieren, wobei die Steuer- und Auswerteeinheit 9 ausgebildet ist, bei Erfassung eines zulässigen Objektes 11 einen Überbrückungsteilbereich 12 zu aktivieren und kein Abschaltsignal zu erzeugen, solange das zulässige Objekt 11 innerhalb des Überbrückungsteilbereiches 12 ist, wobei eine Unterbrechung eines Lichtstrahls 13 in mindestens einem vorbestimmten ersten Teilbereich 14.1 des Sicherheitslichtvorhangs 1 eine Detektion eines zulässigen Objektes 11 ist. Die zulässigen Objekte 11 bewegen sich in Bewegungsrichtung 25, beispielsweise durch ein Förderband auf eine Maschine 2 zu.

Gemäß Figur 1 weist der Sicherheitslichtvorhang 1 einen elektronischen Eingang 15 auf für ein externes Signal einer externen Steuerung 18, wobei das externe Signal ein Objekttypsignal für zulässige Objekte 11 ist, wobei die Steuer- und Auswerteeinheit 9 ausgebildet ist, bei Erfassung des zulässigen Objektes 11 und des Objekttypsignals den Überbrückungsteilbereich 12 zu aktivieren und kein Abschaltsignal zu erzeugen.

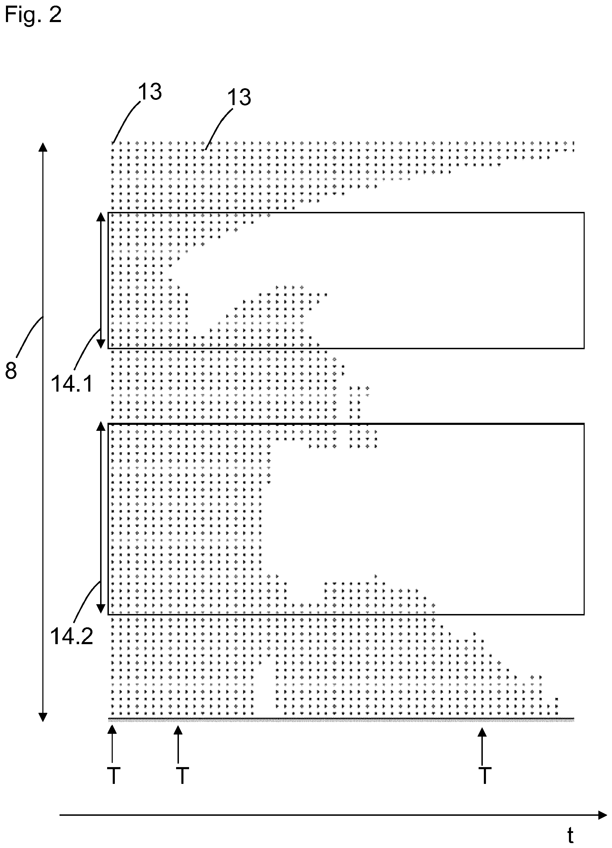

Gemäß Figur 2 sind die Lichtstrahlen 13 punktförmig in Strahlrichtung dargestellt. Wobei die Lichtstrahlen des Sicherheitslichtvorhangs zeitlich nacheinander entlang der Zeitachse t dargestellt sind, wobei jeweils eine senkrechte Reihe eine Momentaufnahme zu einem Zeitpunkt T darstellt.

Gemäß Figur 2 ist eine Unterbrechung mindestens eines Lichtstrahls 13 in mindestens einem zum ersten Teilbereich 14.1 unterschiedlichen und beabstandeten zweiten Teilbereich 14.2 eine Detektion eines zulässigen Objektes. Der erste Teilbereich 14.1 und der zweite Teilbereich 14.2 bilden jeweils Objekterfassungsbereiche im Schutzfeld 8. Die Größe der Teilbereiche kann beispielsweise 150 mm entlang der Längsausdehnung des Sicherheitslichtvorhangs betragen. Wenn in beiden definierten Teilbereichen ein Objekt detektiert wird, aktiviert die Steuer- und Auswerteeinheit den Überbrückungsteilbereich, welcher eine Ausblendung eines Teilbereiches des Schutzfeldes bewirkt.

Gemäß Figur 2 ist die Steuer- und Auswerteeinheit ausgebildet, eine Zeitüberwachung durchzuführen, wobei eine Erkennung eines zulässigen Objektes in dem ersten Teilbereich 14.1 und dem zweiten Teilbereich 14.2 innerhalb eines bestimmten Zeitraumes erfolgen muss. Ansonsten wird das Objekt als unzulässig erkannt.

Gemäß Figur 2 ist die Steuer- und Auswerteeinheit ausgebildet, in mindestens einem der Teilbereiche 14.1 oder 14.2 eine Mindestanzahl von unterbrochenen Lichtstrahlen 13 zu erfassen und den Überbrückungsteilbereich zu aktivieren, wenn die Mindestanzahl von Lichtstrahlen 13 unterbrochen ist.

Gemäß Figur 2 ist die Steuer- und Auswerteeinheit ausgebildet, den Überbrückungsteilbereich zu aktivieren, wenn in dem ersten Teilbereich 14.1 und dem zweiten Teilbereich 14.2 in einem bestimmten Zeitraum eine Mindestanzahl an Lichtstrahlen 13 unterbrochen ist.

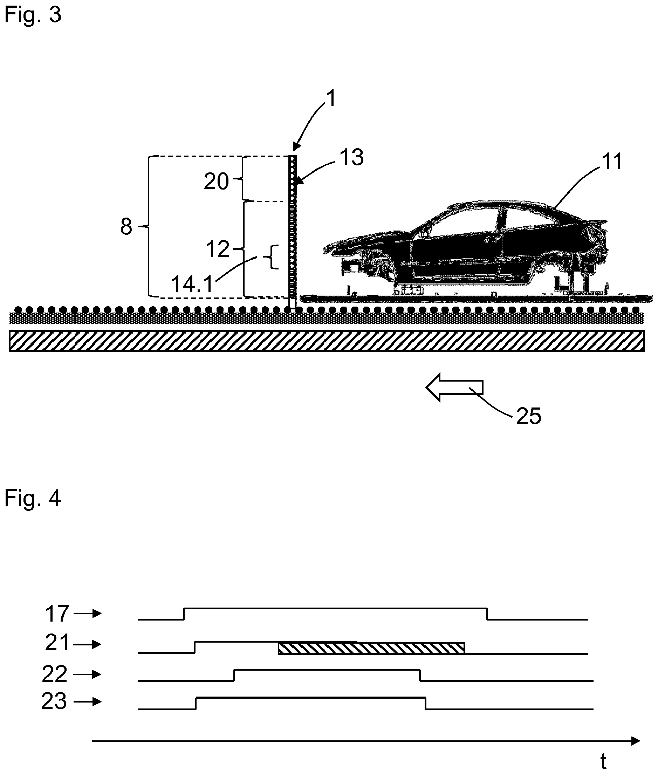

Dabei ist gemäß Figur 3 bevorzugt vorgesehen, dass lediglich der erste Teilbereich 14.1 vorgesehen ist, um ein zulässiges Objekt 11 zu detektieren und das externe Signal ausgewertet wird. Wenn das Objekttypsignal anliegt und ein Objekt 11 im definierten ersten Teilbereich 14.1 detektiert wird, aktiviert die Steuer- und Auswerteeinheit 9 den Überbrückungsteilbereich 12. Oberhalb des Überbrückungsteilbereichs 12 ist ein permanenter Schutzbereich 20 aktiv. Wird in dem permanenten Schutzbereich 20 ein Objekt detektiert, wird ein Abschaltsignal erzeugt, da es sich dann um ein unzulässiges Objekt handeln muss.

Figur 4 zeigt hierzu zu Figur 3 ein Zeitdiagramm entsprechender Signale. Zunächst wird von der Steuerung ein Objekttypsignal 17 bereitgestellt, welches nach einer Flanke einen gültigen Signalpegel aufweist, beispielsweise logisch 1 oder beispielsweise einen Signalpegel von 24 Volt. Anschließend wird von dem Sicherheitslichtvorhang das zulässige Objekt 11 gemäß Figur 3 detektiert. Somit wird vom der Steuer- und Auswerteeinheit das Objekterkennungssignal 21 abgegeben. Gemäß dem Signal 22 befindet sich das zulässige Objekt im Überbrückungsteilbereich 12. Das Überbrückungssignal 23 stellt den aktivierten Überbrückungsteilbereich dar.

Gemäß Figur 4 ist eine Zeitdauer einstellbar, für die der Überbrückungsteilbereich 12 längstens aktivierbar ist. Dadurch wird der Überbrückungsteilbereich 12 zur Sicherheit spätestens nach Ablauf der Zeitspanne deaktiviert. Beispielsweise beträgt die Zeitspanne wenigstens 1 Sekunden bis zu beispielsweise 1 Minute.

Dabei können mehrere verschiedene Zeitdauern in der Steuer- und Auswerteeinheit 9 abgespeichert sein. Je nach Objekttypsignal 17, wobei verschiedene Objekttypsignale 17 vorgesehen sind, können durch die Steuer- und Auswerteeinheit 9 verschiedene Zeitdauern bzw. Zeitspannen eingestellt werden.

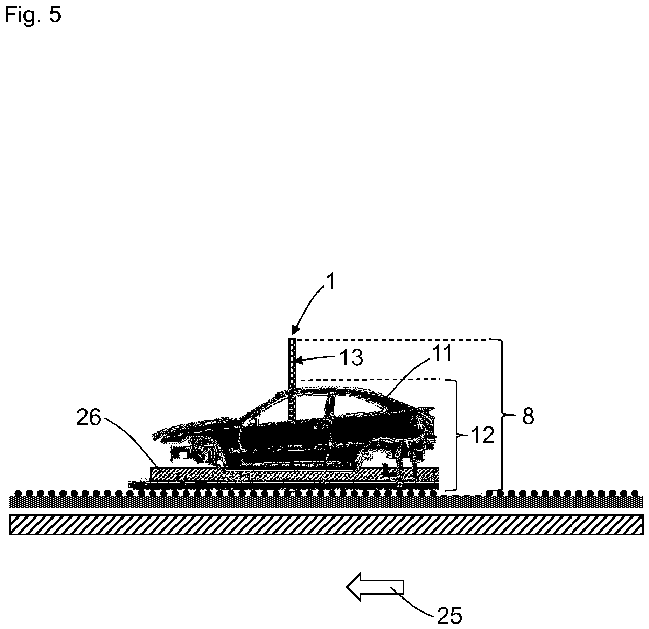

Gemäß Figur 5 ist die Steuer- und Auswerteeinheit 9 ausgebildet, den Überbrückungsteilbereich 12 so lange zu aktivieren, solange mindestens einer der Lichtstrahlen 13 im Schutzfeld 8 unterbrochen ist.

Dabei kann es auch insbesondere vorgesehen sein, den Überbrückungsteilbereich 12 so lange zu aktivieren, solange das Objekttypsignal anliegt und mindestens einer der Lichtstrahlen 13 im Schutzfeld 8 unterbrochen ist.

Gemäß Figur 5 ist die Steuer- und Auswerteeinheit 9 ausgebildet, den Überbrückungsteilbereich 12 so lange zu aktivieren, solange mindestens ein einziger Lichtstrahl 13 im Schutzfeld 8 dauerhaft unterbrochen ist. Der Lichtstrahl bzw. ein entsprechendes Paar aus Lichtsender und Lichtempfänger des Sicherheitslichtvorhanges sind beispielsweise auf der Höhe einer Trägereinrichtung 26 eines zulässigen Objektes 11 angeordnet, wobei die Trägereinrichtung 26 über die ganze Länge eine Lichtstrahlunterbrechung mindestens eines einzigen Lichtstrahles erzeugt. Dabei hat die Trägereinrichtung 26 etwa die gleiche Länge, wie das zulässige Objekt 11 selbst.

Gemäß Figur 5 ist die Steuer- und Auswerteeinheit 9 ausgebildet, den Überbrückungsteilbereich 12 so lange zu aktivieren, solange das Objekttypsignal vorhanden ist und solange eine vorbestimmte Zeitdauer nicht überschritten ist.

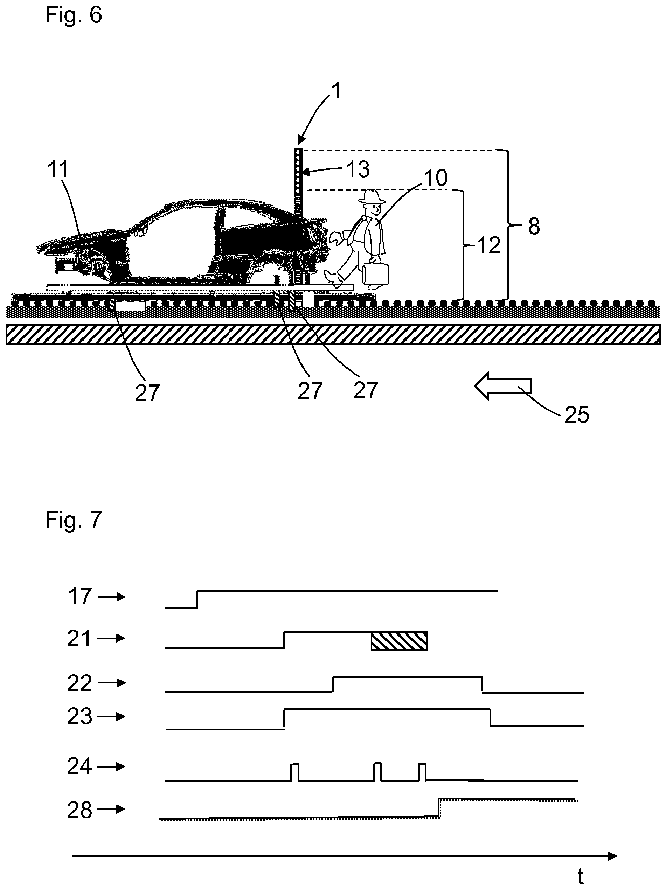

Gemäß Figur 6 ist die Steuer- und Auswerteeinheit 9 ausgebildet, eine Anzahl, eine Position und/oder eine Größe von Teilbereichen und/oder eine Mindestanzahl von notwendig unterbrochenen Lichtstrahlen 13 abhängig von dem Objekttypsignal einzustellen, wobei unterschiedliche Objekttypsignale vorgesehen sind.

Unterschiedliche Objekttypsignale können beispielsweise über den elektronischen Eingang oder auch über mehrere elektronische Eingänge eingelesen werden.

Gemäß Figur 6 ist die Steuer- und Auswerteeinheit 9 ausgebildet, innerhalb des aktiven Überbrückungsteilbereiches 12 eine Anzahl vorbestimmter Lichtstrahlunterbrechungen auszuwerten und bei Nichtunterbrechung der Lichtstrahlen 13 ein Abschaltsignal zu erzeugen. Beispielsweise wird das Abschaltsignal erzeugt, wenn die Anzahl von Lichtstrahlunterbrechungen nach einer bestimmten Zeitdauer von der Steuer- und Auswerteeinheit 9 nicht erkannt wurde.

Die Lichtstrahlunterbrechungen werden beispielsweise durch die Trägereinrichtung, durch Stützen 27 der Trägereinrichtung, oder durch das zulässige Objekt 11 selbst hervorgerufen.

Wird eine voreingestellte Anzahl von Lichtstrahlunterbrechungen detektiert, so wird der Überbrückungsteilbereich 12 wieder deaktiviert.

Figur 7 zeigt hierzu zu Figur 6 ein Zeitdiagramm entsprechender Signale. Zunächst wird von der Steuerung ein Objekttypsignal 17 bereitgestellt, welches nach einer Flanke einen gültigen Signalpegel aufweist, beispielsweise logisch 1 oder beispielsweise einen Signalpegel von 24 Volt. Anschließend wird von dem Sicherheitslichtvorhang 1 das zulässige Objekt 11 gemäß Figur 6 detektiert. Somit wird von der Steuer- und Auswerteeinheit das Objekterkennungssignal 21 abgegeben. Gemäß dem Signal 22 befindet sich das zulässige Objekt im Überbrückungsteilbereich 12. Das Überbrückungssignal 23 stellt den aktivierten Überbrückungsteilbereich 12 dar. Das Stützendetektionssignal 24 gibt an, wann die Stützen 27 gemäß Figur 6 vom Sicherheitslichtvorhang detektiert werden. Das Personenerkennungssignal 28 gibt an, dass ein unzulässiges Objekt 10, nämlich eine Person, detektiert wurde.

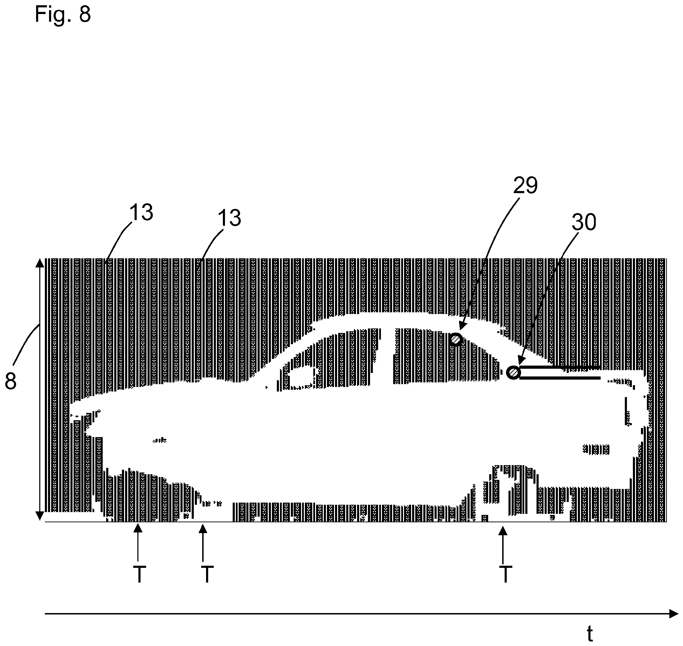

Gemäß Figur 8 sind die Lichtstrahlen 13, ähnlich wie in Figur 2 punktförmig in Strahlrichtung dargestellt. Wobei die Lichtstrahlen 13 des Sicherheitslichtvorhangs zeitlich nacheinander entlang der Zeitachse t dargestellt sind, wobei jeweils eine senkrechte Reihe eine Momentaufnahme zu einem Zeitpunkt T darstellt.

Gemäß Figur 8 ist die Steuer- und Auswerteeinheit ausgebildet, innerhalb des aktiven Überwachungsteilbereiches eine kontinuierliche Veränderung von unterbrochenen Lichtstrahlen auszuwerten und ein Abschaltsignal zu erzeugen wenn die kontinuierliche Veränderung nicht detektierbar ist.

Gemäß Figur 8 werden zwei Punkte bzw. zwei Bereiche für das Objekt bzw. eine Objektkontur definiert. Ein erster Punkt 29 ist für das Starten einer Überwachung, wonach eine Kontur des Objektes beispielsweise stetig abfällt, d. h. oberste unterbrochene Lichtstrahlen nähern sich immer mehr dem Boden, bzw. der Abstand zwischen unterbrochenen Lichtstrahlen und dem Boden wird immer kürzer. Diese Regel wird von der Steuer- und Auswerteeinheit 9 überprüft bis der zweite Punkt 30 erreicht ist. Ab dem zweiten definierten Punkt 30 könnte beispielsweise eine maximale Anzahl an Lichtstrahlen 13 oder eine Größe innerhalb des Überbrückungsteilbereiches definiert werden, die noch zugelassen wird, beispielsweise dass sich die Kontur ab dem zweiten Punkt wieder erhöht. Beispielsweise durch einen Spoiler an einer Fahrzeugkarosse. Würde beispielsweise eine Person auf dem Heck des Fahrzeuges sitzen, würde die Objektkontur abweichen und zu einem Zustand führen, in dem ein Abschaltsignal erzeugt wird.

Die Punkte 29 oder 30 oder Bereiche können beispielsweise grafisch in einer grafischen Benutzeroberfläche mit einem Eingabegerät, nämlich mit einer Maus ausgewählt werden. Die weiteren notwendigen Eingaben, wie beispielsweise die Steigung können ebenfalls über die grafische Benutzeroberfläche eingegeben werden.

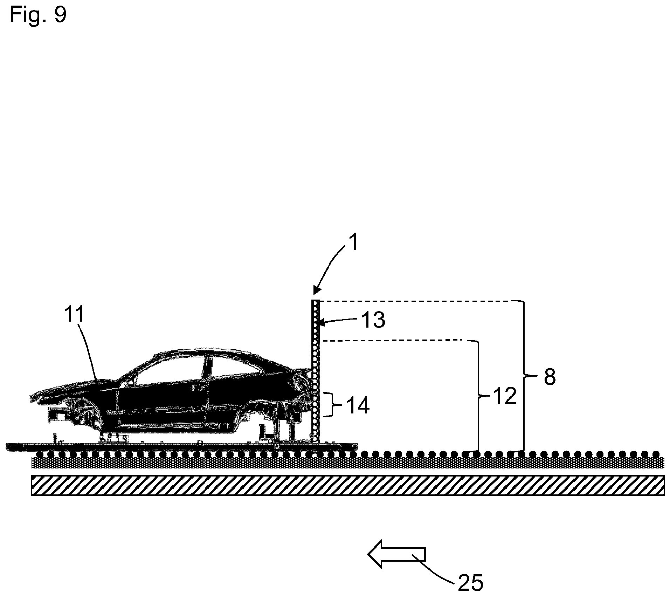

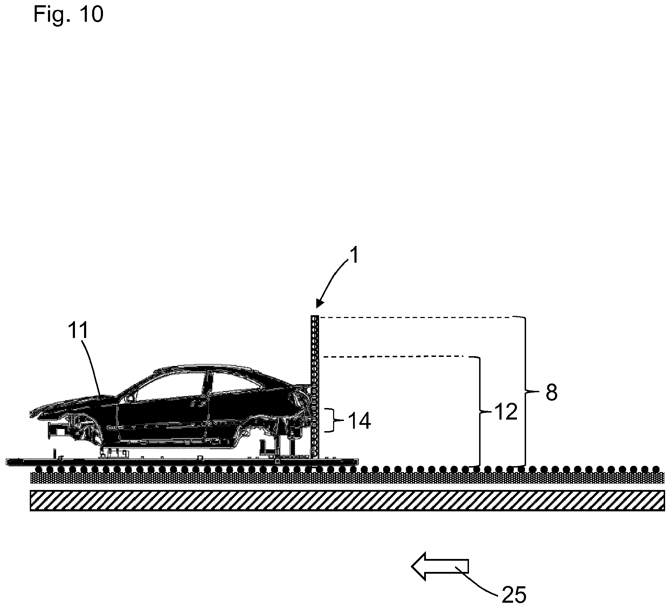

Gemäß Figur 9 und Figur 10 ist die Steuer- und Auswerteeinheit 9 ausgebildet, den aktiven Überwachungsteilbereich 12 zu deaktivieren, wenn eine Mindestanzahl von notwendig unterbrochenen Lichtstrahlen 13 innerhalb des Teilbereiches 14 detektierbar ist, wobei innerhalb einer vorbestimmten Zeit der Überwachungsteilbereich 12 deaktivierbar ist.

Dabei wird beispielsweise eine Detektion der Endphase durch Unterbrechung eines definierten Objekt-Ende-Erfassungsbereichs bzw. Teilbereichs 14 durchgeführt. Dabei können auch mehrere Teilbereiche 14 vorgesehen sein.

Falls alle Lichtstrahlen des Sicherheitslichtvorhanges frei sind, kann es vorgesehen sein, den Überbrückungsteilbereich 12 zu deaktivieren und das Schutzfeld 8 vollständig wieder zu überwachen. Dadurch wird nach einem Durchfahren des zulässigen Objektes 11 automatisch wieder die Schutzfunktion des Sicherheitslichtvorhanges 1 aktiviert.

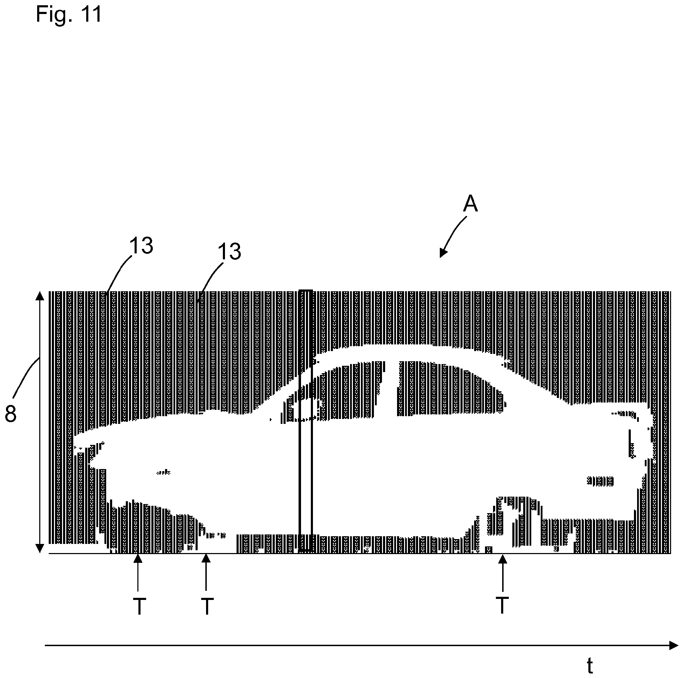

Gemäß Figur 11 ist die Steuer- und Auswerteeinheit 9 ausgebildet, während des aktivierten Überbrückungsteilbereiches die Lichtstrahlunterbrechungen im aktivierten Überbrückungsteilbereich aufzuzeichnen und auszuwerten und eine Typerkennung aufgrund gespeicherter Typmustern A von unterbrochenen Lichtstrahlen 13 durchzuführen.

Die Typerkennung basiert beispielsweise auf mehreren gespeicherten Typmustern A. Wird eines dieser Typmuster A erkannt, wird der zugehörige Typ beispielsweise an eine übergeordnete Steuerung übermittelt bzw. weitergegeben.

Die Typüberwachung kann zur Verschärfung der Überwachung eingesetzt werden. Dabei wird der erwartete Typ vorgegeben. Wird dieser in einer bestimmten Zeit nicht detektiert, wird die Überbrückung aufgehoben. Die Erkennung kann beispielsweise in einer Automobil-Lackierzelle bei der Produktion von Automobilen eingesetzt werden.

### Bezugszeichen:

1 Sicherheitslichtvorhang
2 Maschine
4 Sendeeinheit
5 Lichtsender
6 Empfangseinheit
7 Empfänger
8 Schutzfeldes
9 Steuer- und Auswerteeinheit
10 unzulässiges Objekt
11 zulässiges Objekt
12 Überbrückungsteilbereich
13 Lichtstrahl
14 Teilbereich
14.1 erster Teilbereich
14.2 zweiter Teilbereich
15 elektronischer Eingang
17 Objekttypsignal
18 externe Steuerung
19 Gefahrenbereich
20 permanenter Schutzbereich
21 Objekterkennungssignal
22 Objekt im Überbrückungsteilbereich
23 Überbrückungssignal
24 Stützendetektionssignal
25 Bewegungsrichtung
26 Trägereinrichtung
27 Stützen der Trägereinrichtung
28 Personenerkennungssignal
29 erster Punkt
30 zweiter Punkt
T Zeitpunkt
t Zeitachse
A Typmuster

## Patentansprüche

1. Verfahren zur Überwachung eines Gefahrenbereichs (19) einer Maschine (2) oder Anlage mit einem Sicherheitslichtvorhang (1),
umfassend eine Sendeeinheit (4) mit einer Vielzahl von Lichtstrahlen (13) emittierenden Lichtsendern (5)
und einer Empfangseinheit (6) mit einer Vielzahl von Lichtstrahlen (13) empfangenden Lichtempfängern (7) zur Überwachung eines Schutzfeldes (8),
eine Steuer- und Auswerteeinheit (9), welche ausgebildet ist, bei Erfassung eines unzulässigen Objektes (10) im Schutzfeld (8) als Sicherheitsfunktion ein Abschaltsignal für die Maschine (2) oder Anlage (3) zu generieren,
wobei
die Steuer- und Auswerteeinheit (9) ausgebildet ist, bei Erfassung eines zulässigen Objektes (11) einen Überbrückungsteilbereich (12) zu aktivieren und kein Abschaltsignal zu erzeugen, solange das zulässige Objekt (11) innerhalb des Überbrückungsteilbereiches (12) ist,
wobei die Steuer- und Auswerteinheit ausgebildet ist, in den Teilbereichen jeweils eine Mindestanzahl von unterbrochenen Lichtstrahlen zu erfassen, wobei eine Unterbrechung von Lichtstrahlen (13) in mindestens einem vorbestimmten ersten Teilbereich (14.1) des Sicherheitslichtvorhang (1) eine Detektion eines zulässigen Objektes (11) ist, wobei der erste Teilbereich (14.1) innerhalb des Überbrückungsteilbereiches (12) angeordnet ist, **dadurch gekennzeichnet, dass** eine Unterbrechung von Lichtstrahlen (13) in mindestens einem zweiten unterschiedlichen und zum ersten Teilbereich (14.1) beabstandeten zweiten Teilbereich (14.2) eine Detektion eines zulässigen Objektes (11) ist, wobei die Steuer- und Auswerteeinheit (9) ausgebildet ist, eine Zeitüberwachung durchzuführen, wobei eine Erkennung eines zulässigen Objektes (11) in dem ersten Teilbereich (14.1) und dem zweiten Teilbereich (14.2) innerhalb eines bestimmten Zeitraumes erfolgen muss, ansonsten wird das Objekt als unzulässig erkannt, wobei der erste Teilbereich und der zweite Teilbereich jeweils Objekterfassungsbereiche im Schutzfeld bilden.

2. Verfahren nach mindestens einem der vorhergehenden Ansprüche, **dadurch gekennzeichnet, dass** der Sicherheitslichtvorhang (1) einen elektronischen Eingang (15) aufweist für ein externes Signal (16) einer externen Steuerung (18), wobei das externe Signal ein Objekttypsignal (17) für zulässige Objekte (11) ist, wobei die Steuer- und Auswerteeinheit (9) ausgebildet ist, bei Erfassung des zulässigen Objektes (11) und des Objekttypsignals (17) den Überbrückungsteilbereich (12) zu aktivieren und kein Abschaltsignal zu erzeugen.

3. Verfahren nach mindestens einem der vorhergehenden Ansprüche, **dadurch gekennzeichnet, dass** eine Zeitdauer einstellbar ist, für die der Überbrückungsteilbereich längstens aktivierbar ist.

4. Verfahren nach mindestens einem der vorhergehenden Ansprüche, **dadurch gekennzeichnet, dass** die Steuer- und Auswerteeinheit (9) ausgebildet ist, den Überbrückungsteilbereich (12) so lange zu aktivieren, solange mindestens einer der Lichtstrahlen (13) im Schutzfeld (8) unterbrochen ist.

5. Verfahren nach mindestens einem der vorhergehenden Ansprüche, **dadurch gekennzeichnet, dass** die Steuer- und Auswerteeinheit (9) ausgebildet ist, den Überbrückungsteilbereich (12) so lange zu aktivieren, solange mindestens ein einziger Lichtstrahl (13) im Schutzfeld (8) dauerhaft unterbrochen ist.

6. Verfahren nach mindestens einem der vorhergehenden Ansprüche, **dadurch gekennzeichnet, dass** die Steuer- und Auswerteeinheit (9) ausgebildet ist, den Überbrückungsteilbereich (12) so lange zu aktivieren, solange das Objekttypsignal (17) vorhanden ist und solange eine vorbestimmte Zeitdauer nicht überschritten ist.

7. Verfahren nach mindestens einem der vorhergehenden Ansprüche, **dadurch gekennzeichnet, dass** die Steuer- und Auswerteeinheit (9) ausgebildet ist, in mindestens einem der Teilbereiche (14) eine Mindestanzahl von unterbrochenen Lichtstrahlen (13) zu erfassen und den Überbrückungsteilbereich (12) zu aktivieren, wenn die Mindestanzahl von Lichtstrahlen (13) unterbrochen ist.

8. Verfahren nach mindestens einem der vorhergehenden Ansprüche, **dadurch gekennzeichnet, dass** die Steuer- und Auswerteeinheit (9) ausgebildet ist, den Überbrückungsteilbereich (12) zu aktivieren, wenn in dem ersten Teilbereich (14.1) und dem zweiten Teilbereich (14.2) in einem bestimmten Zeitraum eine Mindestanzahl an Lichtstrahlen (13) unterbrochen ist.

9. Verfahren nach mindestens einem der vorhergehenden Ansprüche, **dadurch gekennzeichnet, dass** die Steuer- und Auswerteeinheit (9) ausgebildet ist, eine Anzahl, eine Position und/oder eine Größe von Teilbereichen (14) und/oder eine Mindestanzahl von notwendig unterbrochenen Lichtstrahlen (13) abhängig von dem Objekttypsignal (17) einzustellen, wobei unterschiedliche Objekttypsignale (17) vorgesehen sind.

10. Verfahren nach mindestens einem der vorhergehenden Ansprüche, **dadurch gekennzeichnet, dass** die Steuer- und Auswerteeinheit (9) ausgebildet ist, innerhalb des aktiven Überbrückungsteilbereiches (12) eine Anzahl Unterbrechungen vorbestimmter Lichtstrahlen (13) auszuwerten und bei Nichtunterbrechung der Lichtstrahlen (13) ein Abschaltsignal zu erzeugen.

11. Verfahren nach mindestens einem der vorhergehenden Ansprüche, **dadurch gekennzeichnet, dass** die Steuer- und Auswerteeinheit (9) ausgebildet ist, innerhalb des aktiven Überwachungsteilbereiches (12) eine kontinuierliche Veränderung von unterbrochenen Lichtstrahlen (13) auszuwerten und ein Abschaltsignal zu erzeugen, wenn die kontinuierliche Veränderung nicht detektierbar ist.

12. Verfahren nach mindestens einem der vorhergehenden Ansprüche, **dadurch gekennzeichnet, dass** die Steuer- und Auswerteeinheit (9) ausgebildet ist, den aktiven Überwachungsteilbereich (12) zu deaktivieren, wenn eine Mindestanzahl von notwendig unterbrochenen Lichtstrahlen (13) innerhalb des Teilbereiches detektierbar ist, wobei innerhalb einer vorbestimmten Zeit der Überwachungsteilbereich (12) deaktivierbar ist.

13. Verfahren nach mindestens einem der vorhergehenden Ansprüche, **dadurch gekennzeichnet, dass** die Steuer- und Auswerteeinheit (9) ausgebildet ist, während des aktivierten Überbrückungsteilbereiches (12) die Unterbrechung von Lichtstrahlen (13) im aktivierten Überbrückungsteilbereich (12) aufzuzeichnen und auszuwerten und eine Typerkennung aufgrund gespeicherter Typmustern (A) von unterbrochenen Lichtstrahlen (13) durchzuführen.

## Claims

1. A method of monitoring a hazard zone (19) of a machine (2) or plant having a safety light curtain (1),
comprising a transmission unit (4) having a plurality of light transmitters (5) emitting light beams (13),
and having a reception unit (6) having a plurality of light receivers (7) receiving light beams (13) for monitoring a protected field (8),
and comprising a control and evaluation unit (9) that is configured to generate a switch-off signal for the machine (2) or plant (3) as a safety function on detection of an unauthorized object (10) in the protected field (8),
wherein
the control and evaluation unit (9) is configured to activate a partial bridging zone (12) and not to generate a switch-off signal on detection of an authorized object (11) as long as the authorized object (11) is within the partial bridging zone (12);
and wherein the control and evaluation unit (9) is configured to detect a respective minimum number of interrupted light beams in the partial zones; wherein an interruption of light beams (13) in at least one predetermined first partial zone (14.1) of the safety light curtain (1) is a detection of an authorized object (11), and with the first partial zone (14.1) being arranged within the partial bridging zone (12), **characterized in that** an interruption of light beams (13) in at least one second different partial zone (14.2) spaced apart from the first partial zone (14.1) is a detection of an authorized object (11),
with the control and evaluation unit (9) being configured to perform a time monitoring, with a recognition of an authorized object (11) in the first partial zone (14.1) and in the second partial zone (14.2) having to take place within a specific time period and the object otherwise being recognized as unauthorized, and with the first partial zone and the second partial zone each forming object detection zones in the protected field.

2. A method in accordance with at least one of the preceding claims, **characterized in that** the safety light curtain (1) has an electronic input (15) for an external signal (16) of an external control (18), with the external signal being an object type signal (17) for authorized objects (11), and with the control and evaluation unit (9) being configured to activate the partial bridging zone (12) and not to generate a switch-off signal on detection of the authorized object (11) and the object type signal (17).

3. A method in accordance with at least one of the preceding claims, **characterized in that** a time duration is settable for which the partial bridging zone can be activated at a maximum.

4. A method in accordance with at least one of the preceding claims, **characterized in that** the control and evaluation unit (9) is configured to activate the partial bridging zone (12) for as long as at least one of the light beams (13) in the protected field (8) is interrupted.

5. A method in accordance with at least one of the preceding claims, **characterized in that** the control and evaluation unit (9) is configured to activate the partial bridging zone (12) for as long as at least one single light beam (13) in the protected field (8) is permanently interrupted.

6. A method in accordance with at least one of the preceding claims, **characterized in that** the control and evaluation unit (9) is configured to activate the partial bridging zone (12) for as long as the object type signal (17) is present and for as long as a predetermined time period is not exceeded.

7. A method in accordance with at least one of the preceding claims, **characterized in that** the control and evaluation unit (9) is configured to detect a minimum number of interrupted light beams (13) in at least one of the partial zones (14) and to activate the partial bridging zone (12) when the minimum number of light beams (13) is interrupted.

8. A method in accordance with at least one of the preceding claims, **characterized in that** the control and evaluation unit (9) is configured to activate the partial bridging zone (12) when a minimum number of light beams (13) is interrupted in the first partial zone (14.1) and in the second partial zone (14.2) in a specific time period.

9. A method in accordance with at least one of the preceding claims, **characterized in that** the control and evaluation unit (9) is configured to set a number, a position, and/or a size of partial zones (14) and/or a minimum number of necessarily interrupted light beams (13) in dependence on the object type signal (17), with different object type signals (17) being provided.

10. A method in accordance with at least one of the preceding claims, **characterized in that** the control and evaluation unit (9) is configured to evaluate a number of interruptions of predetermined light beams (13) within the active partial bridging zone (12) and to generate a switch-off signal on a non-interruption of the light beams (13).

11. A method in accordance with at least one of the preceding claims, **characterized in that** the control and evaluation unit (9) is configured to evaluate a continuous change of interrupted light beams (13) within the active partial monitored zone (12) and to generate a switch-off signal when the continuous change cannot be detected.

12. A method in accordance with at least one of the preceding claims, **characterized in that** the control and evaluation unit (9) is configured to deactivate the active partial monitored zone (12) when a minimum number of necessarily interrupted light beams (13) can be detected within the partial zone, with the partial monitored zone (12) being able to be deactivated within a predetermined time.

13. A method in accordance with at least one of the preceding claims, **characterized in that** the control and evaluation unit (9) is configured to record and evaluate the interruption of light beams (13) in the activated partial bridging zone (12) during the activated partial bridging zone (12) and to perform a type recognition based on stored type patterns (A) of interrupted light beams (13).

## Revendications

1. Procédé pour la surveillance d'une zone de danger (19) d'une machine (2) ou d'une installation pourvue d'un rideau lumineux de sécurité (1),
comprenant une unité d'émission (4) présentant une pluralité d'émetteurs de lumière (5) émettant des rayons lumineux (13),
et une unité de réception (6) présentant une pluralité de récepteurs de lumière (7) recevant des rayons lumineux (13) pour la surveillance d'un champ de protection (8),
une unité de commande et d'évaluation (9) qui est réalisée pour générer un signal de coupure pour la machine (2) ou pour l'installation (3) en tant que fonction de sécurité lorsqu'un objet inadmissible (10) est détecté dans le champ de protection (8),
dans lequel
l'unité de commande et d'évaluation (9) est réalisée pour activer une zone partielle de pontage (12) lorsqu'un objet admissible (11) est détecté et pour ne pas générer de signal de coupure tant que l'objet admissible (11) se trouve à l'intérieur de la zone partielle de pontage (12),
l'unité de commande et d'évaluation est réalisée pour détecter dans les zones partielles un nombre minimum respectif de rayons lumineux interrompus,
une interruption des rayons lumineux (13) dans au moins une première zone partielle prédéterminée (14.1) du rideau lumineux de sécurité (1) est une détection d'un objet admissible (11), la première zone partielle (14.1) étant disposée à l'intérieur de la zone partielle de pontage (12),
**caractérisé en ce que**
une interruption des rayons lumineux (13) dans au moins une seconde zone partielle (14.2) différente et espacée de la première zone partielle (14.1) est une détection d'un objet admissible (11),
l'unité de commande et d'évaluation (9) est réalisée pour effectuer une surveillance temporelle, une détection d'un objet admissible (11) dans la première zone partielle (14.1) et dans la seconde zone partielle (14.2) devant avoir lieu dans un certain délai, sinon l'objet est détecté comme étant inadmissible, la première zone partielle et la seconde zone partielle formant chacune des zones de détection d'objet dans le champ de protection.

2. Procédé selon l'une au moins des revendications précédentes, **caractérisé en ce que** le rideau lumineux de sécurité (1) présente une entrée électronique (15) pour un signal externe (16) d'une commande externe (18), le signal externe étant un signal de type d'objet (17) pour des objets admissibles (11), l'unité de commande et d'évaluation (9) étant réalisée pour activer la zone partielle de pontage (12) et pour ne pas générer de signal de coupure lorsque l'objet admissible (11) et le signal de type d'objet (17) sont détectés.

3. Procédé selon l'une au moins des revendications précédentes, **caractérisé en ce qu'** il est possible de régler une durée pendant laquelle la zone partielle de pontage peut être activée au plus long.

4. Procédé selon l'une au moins des revendications précédentes, **caractérisé en ce que** l'unité de commande et d'évaluation (9) est réalisée pour activer la zone partielle de pontage (12) tant qu'au moins l'un des rayons lumineux (13) dans le champ de protection (8) est interrompu.

5. Procédé selon l'une au moins des revendications précédentes, **caractérisé en ce que** l'unité de commande et d'évaluation (9) est réalisée pour activer la zone partielle de pontage (12) tant qu'au moins un seul rayon lumineux (13) dans le champ de protection (8) est interrompu en permanence.

6. Procédé selon l'une au moins des revendications précédentes, **caractérisé en ce que** l'unité de commande et d'évaluation (9) est réalisée pour activer la zone partielle de pontage (12) tant que le signal de type d'objet (17) est présent et tant qu'une durée prédéterminée n'est pas dépassée.

7. Procédé selon l'une au moins des revendications précédentes, **caractérisé en ce que** l'unité de commande et d'évaluation (9) est réalisée pour détecter un nombre minimum de rayons lumineux interrompus (13) dans l'une au moins des zones partielles (14) et pour activer la zone partielle de pontage (12) si le nombre minimum de rayons lumineux (13) est interrompu.

8. Procédé selon l'une au moins des revendications précédentes, **caractérisé en ce que** l'unité de commande et d'évaluation (9) est réalisée pour activer la zone partielle de pontage (12) si un nombre minimum de rayons lumineux (13) est interrompu dans la première zone partielle (14.1) et dans la seconde zone partielle (14.2) pendant une période de temps déterminée.

9. Procédé selon l'une au moins des revendications précédentes, **caractérisé en ce que** l'unité de commande et d'évaluation (9) est réalisée pour régler un nombre, une position et/ou une taille de zones partielles (14) et/ou un nombre minimum de rayons lumineux (13) nécessairement interrompus en fonction du signal de type d'objet (17), différents signaux de type d'objet (17) étant prévus.

10. Procédé selon l'une au moins des revendications précédentes, **caractérisé en ce que** l'unité de commande et d'évaluation (9) est réalisée pour évaluer un certain nombre d'interruptions de rayons lumineux prédéterminés (13) à l'intérieur de la zone partielle de pontage active (12) et pour générer un signal de coupure en cas de non-interruption des rayons lumineux (13).

11. Procédé selon l'une au moins des revendications précédentes, **caractérisé en ce que** l'unité de commande et d'évaluation (9) est réalisée pour évaluer une modification continue des rayons lumineux interrompus (13) à l'intérieur de la zone partielle de surveillance active (12) et pour générer un signal de coupure si la modification continue ne peut pas être détectée.

12. Procédé selon l'une au moins des revendications précédentes, **caractérisé en ce que** l'unité de commande et d'évaluation (9) est réalisée pour désactiver la zone partielle de surveillance active (12) si un nombre minimum de rayons lumineux (13) nécessairement interrompus peut être détecté à l'intérieur de la zone partielle, la zone partielle de surveillance (12) pouvant être désactivée dans un délai prédéterminé.

13. Procédé selon l'une au moins des revendications précédentes, **caractérisé en ce que** l'unité de commande et d'évaluation (9) est réalisée pour enregistrer et évaluer l'interruption de rayons lumineux (13) dans la zone partielle de pontage activée (12) pendant l'activation de la zone partielle de pontage (12) et pour effectuer une reconnaissance de type sur la base de modèles de type (A) mémorisés de rayons lumineux interrompus (13).
